Europäisches Patentamt

European Patent Office

Office européen des brevets

(19)

(11) Veröffentlichungsnummer: **0 250 394**
**A2**

(12)

# EUROPÄISCHE PATENTANMELDUNG

(21) Anmeldenummer: **87890133.9**

(22) Anmeldetag: **12.06.87**

(51) Int. Cl.4: **C 02 F 9/00**
**B 01 D 37/00**

(30) Priorität: **18.06.86 AT 1658/86**

(43) Veröffentlichungstag der Anmeldung:
**23.12.87 Patentblatt 87/52**

(84) Benannte Vertragsstaaten:
**AT BE CH DE FR GB IT LI NL SE**

(71) Anmelder: **Barth, Franz**
**Weitendorf 210**
**A-8410 Wildon (AT)**

(72) Erfinder: **Barth, Franz**
**Weitendorf 210**
**A-8410 Wildon (AT)**

(74) Vertreter: **Häupl, Armin, Dipl.-Ing. et al**
**Patentanwälte Dipl.-Ing.Dr. Hans Collin Dipl.-Ing. Erwin**
**Buresch Dipl.-Ing.Dr. Helmut Wildhack Mariahilferstrasse**
**50**
**A-1070 Wien (AT)**

(54) **Verfahren und Vorrichtung zum Reinigen von Abwasser aus Druckerei-, insbesondere Siebdruckbetrieben.**

(57) Die Erfindung betrifft Verfahren und Vorrichtungen zum Reinigen von, insbesondere industriellem, Abwasser aus Druckerei- insbesondere Siebdruckbetrieben, das Farbstofffe und organisches Lösungsmittel enthält. Die Erfindung besteht vornehmlich darin, daß das Abwasser, insbesondere nach einer Grobfiltrierung, filtriert, insbesondere feinfiltriert, wird, wobei die im Abwasser enthaltenen Farbstoffe abgeschieden werden, und daß danach das filtrierte Abwasser unter Verwendung von Luft als Desorptionsmittel desorbiert bzw. gestrippt wird, wodurch zumindest der überwiegende Teil der nach dem Filtrieren noch im Abwasser vorhandenen Verunreinigungen, vor allem Lösungsmittel, insbesondere das organische Lösungsmittel, sowie gegebenenfalls Tenside aus dem Abwasser entfernt wird.

EP 0 250 394 A2

**Beschreibung**

Verfahren und Vorrichtung zum Reinigen von Abwasser aus Druckerei-, insbesondere Siebdruckbetrieben

Die Erfindung betrifft ein Verfahren zum Reinigen von, insbesondere industriellem, Abwasser aus Druckerei-, insbesondere Siebdruckbetrieben, das Farbstoffe, organisches Lösungsmittel und gegebenenfalls andere Verunreinigungen enthält.

Die Erfindung betrifft weiters eine Vorrichtung zur Durchführung dieses Verfahrens.

In der Siebdruckerei kommt es beim Waschen bzw. Entwickeln der beschichteten Druckplatten zu Wasserverunreinigungen. Es gelangen vornnehmlich organische Lösungsmittel, Farbstoffe und Schmutzstoffe (hauptsächlich Bestandteile der Schicht) in das Abwasser. Eine Einleitung dieses Abwassers in den Vorfluter ist nicht möglich. Eine biologische Reinigung ist nur bedingt möglich, da der Gehalt an aromatischen Kohlenwasserstoffen für eine biologische Klärung zu hoch ist und eine deutliche Färbung des Wassers vorliegt.

Ein Abtrennen der Inhaltsstoffe, und zwar der Farben, Schmutzstoff und organischen Lösungsmittel ist daher unbedingt notwendig, um entweder das Abwasser in einen Kanal, in eine Kläranlage od.dgl., einleiten zu können oder das Wasser für die im Verfahren angewendeten Schritte wiederzuverwenden.

Die bekannten Verfahren zum Reinigen von Abwasser haben sich für die genannten Verwendungszwecke, nämlich dem Reinigen vor Farbstoff und/oder organischen Lösungsmitteln enthaltendem Abwasser als ungeeignet oder als zu kostenintensiv erwiesen.

Aufgabe der Erfindung ist es, diese Nachteile zu vermeiden und ein Verfahren sowie eine Vorrichtung zum Reinigen von Abwasser von Druckerei- ionsbesondere von Siebdruckbetrieben zu schaffen, bei dem auch das Abtrennen von Farbstoff und bzw. oder organischem Lösungsmittel und gegebenenfalls anderen Verunreinigungen gewährleistet wird.

Dies wird gemäß der Erfindung bei einem Verfahren der eingangs genannten Art dadurch erreicht, daß das Abwasser, insbesondere nach einer Grobfiltrierung filtriert, insbesondere feinfiltriert, wird, wobei die im Abwasser enthaltenen Farbstoffe abgeschieden werden, und daß danach das filtrierte Abwasser unter Verwendung von Luft als Desorptionsmittel desorbiert bzw. gestrippt wird, wodurch zumindest der überwiegende Teil der nach dem Filtrieren noch im Abwasser vorhandenen Verunreinigungen, vor allem Lösungsmittel, insbesondere das organische Lösungsmittel, sowie gegebenenfalls Tenside aus dem Abwasser entfernt wird. Es kommen insbesondere Abwässer mit folgenden Inhaltsstoffen infrage: Farbpigmente, Azofarbstoffe, Bindemittel der Farben, Entfettungsmittel, Oxydationsmittel für Siebdruckemulsionen, Lösungsmittel, z.B. Xylol, Cyclohexanon, Butylacetat, Ester, Alkohole, Isobutanol, Toluol, Naphta .

Durch die Kombination der Verfahrensschritte von Filtration und Desorption bzw. Strippen mit Luft wird das Abwasser so weit von organischen Bestandteilen, Farbstoffen, Druckfarbenresten und Schwebstoffen (Schichtbestandteilen) gereinigt, daß es für eine Wiederverwendung in den Arbeitsschritten (Entwickeln, Entschichten, Farbrest-Entfernen, Entfetten) des Betriebes geeignet ist, bzw. einer biologischen Kläranlage oder gegebenenfalls dem Kanal zugeleitet werden kann.

Das erfindungsgemäße Verfahren eignet sich zum Reinigen des verschmutzten Druckerei- bzw. Siebdruckbetrieb-Abwassers bis zu einem Grad, daß ein Wiederverwenden für alle Verfahrensschritte möglich ist.

Im Zusammenhang mit der Aufbereitung von Industrie- und Gebrauchswässern ist das Filtrieren und bzw. oder Strippen von Abwasser bekannt. Zum Reinigen von Abwässern aus der Siebdruckerei, die Farbstoffe und organischen Lösungsmittel enthalten, ist die Kombination von Filtrieren und Strippen hingegen nicht verwendet worden.

In Ausgestaltung der Erfindung ist vorgesehen, daß zum Kontaktieren des Desorptionsmittels Luft mit dem filtrierten Abwasser das Desorptionsmittel dispers bzw. in Blasenform, vorzugsweise im wesentlichen von unten nach oben, durch das filtrierte Abwasser, das als kontinuierliche Phase vorliegen kann, hindurchgeführt wird, wobei die Blasengröße des Desorptionsmittels, insbesondere 0,4 - 4 mm beträgt. Durch diese Maßnahme wird eine optimale Desorption, d.h. ein optimales Loslösen der vom Abwasser ab- bzw. adsorbierten Stoffe, gewährleistet.

Für die praktische Durchführung des Verfahrens ist es zweckmäßig, wenn das Desorptionsmittel Luft in Blasenform und unter Druck, gegebenenfalls diskontinuierlich, in das filtrierte Abwasser eingeführt wird, wobei vorzugsweise 5 - 25 l Desorptionsmittel pro Liter Abwasser verwendet wird.

Es ist möglich, daß die Filtration des Abwassers vor der Desorption ein- oder mehrstufig ausgeführt wird. Vor allem ist es möglich, zuerst etwaige Grobverunreinigungen abzutrennen und danach durch Feinfiltration die Farbstoffe auszuscheiden.

Um nach dem Ausscheiden des organischen Lösungsmittels allenfalls noch vorhandene Restverunreinigungen beseitigen zu können, ist es vorteilhaft, wenn das Abwasser nach der Desorption nochmals filtriert wird.

Zum Reinigen von Abwasser, das aus dem Entfettungsvorgang mit Tensiden verunreinigt ist, und das daher bei der Desorption zu Schaumbildung neigen kann, ist es günstig, wenn bei der Desorption des filtrierten Abwassers mittels Luft ein Entschäumungsmittel zugegeben wird. Die Zugabe des Entschäumungsmittels erfolgt dabei nur in einem solchen Ausmaß, daß eine Wiederverwendung des gereinigten Abwassers möglich ist.

Es ist weiters möglich, daß das aus dem Abwasser austretende Desorptionsmittel gereinigt, vorzugsweise durch Aktivkohle filtriert, und gegebenenfalls wiederverwendet wird. Dabei kann das aus dem Abwasser austretende Desorptionsmittel gegebenenfalls in eine vorhandene Maschinenentlüftung eines Druckereibetriebes eingeleitet werden und eventuell gemeinsam oder getrennt in einer geeigneten Abluftreinigungsanlage behandelt werden.

Gemäß der weiteren Ausgestaltung der Erfindung kann es von besonderem Vorteil sein, wenn in Abhängigkeit von, insbesondere mittels Druckwächtern festgestelltem, Zustand der Filter der Abwasserzufluß zu den Filtern, insbesondere durch Einregelung, vornehmlich durch Erhöhung, der Pumpleistung auf gleiche Durchflußmenge, sowie gegebenenfalls die Desorptionsmittelzugabe gesteuert wird.

Die erfindungsgemäße Vorrichtung zur Durchführung des erfindungsgemäßen Verfahrens ist dadurch gekennzeichnet, daß wenigstens eine Filtereinrichtung für das Abwasser vorgesehen ist, die mittels einer Leitung mit einer in Strömungsrichtung des Abwassers nachgeschalteten eine Luftzuführung aufweisenden Desorptionseinrichtung verbunden ist.

Eine bevorzugte Bauform dieser Vorrichtung besteht darin, daß die Desorptionseinrichtung einen im wesentlichen geschlossenen Behälter aufweist, in dessen unterem Bereich wenigstens eine Dispergiereinrichtung zum Einbringen des Desorptionsmittels bzw. Strippgases Luft in das Abwasser vorgesehen ist, und in dessen oberem Bereich wenigstens eine Austrittsöffnung zum Abführen des die aus dem Abwasser aufgenommenen Verunreinigungen insbesondere organischen Substanzen mit sich führenden Desorptionsmittels angeordnet ist.

Zur Erzielung des erforderlichen bzw. gewünschten Druckes des Desorptionsmittels ist es zweckmäßig, daß die Dispergiereinrichtung mit einer Leitung verbunden ist, in der wenigstens eine Förderpumpe bzw. ein Gebläse zum Zuführen des Desorptionsmittels angeordnet ist.

Um das Abwasser mit entsprechendem Druck durch die Filtereinrichtung bzw. Desorptionseinrichtung zu führen, ist es vorteilhaft, wenn vor der Filtereinrichtung wenigstens eine Förderpumpe zum Zuführen des Abwassers zu der Filtereinrichtung bzw. zur Desorptionseinrichtung angeordnet ist.

Die Filtration kann ein-, zwei- oder mehrstufig ausgebildet werden. Dabei ist es zweckmäßig, daß bei zwei der Desorptionseinrichtung vorgeschalteten Filtereinrichtungen die in Strömungsrichtung des Abwassers zuerst angeordnete Filtereinrichtung als Grobfilter, beispielsweise mit einem Filtereinsatz aus Mineralwolle, ausgebildet ist, und die in Strömungsrichtung des Abwassers danach angeordnete Filtereinrichtung als Feinfilter, beispielsweise als Kammerfilterpresse mit feinporigen Filterplatten, ausgebildet ist. Zum Grobstoffabtrennen können vornehmlich Faserfilter, wie z.B. Glaswolle, verwendet werden und für das Abtrennen der Farbpartikel können sehr feinporige Filterelemente verwendet werden. Für die Aufnahme der relativ hohen Druckverluste eignen sich besonders Filterpressen entsprechender Baugröße in bezug auf Filterfläche und Durchsatz.

Um nach dem Abtrennen der organischen Bestandteile das Entfernen von allfälligen kleineren Restverunreinigungen zu gewährleisten, ist es zweckmäßig, wenn in Strömungsrichtung des Abwassers nach der Desorptionseinrichtung wenigstens ein Nachfilter zum Abscheiden von Restverunreinigungen vorgesehen ist, der mit einer Leitung an die Desorptionseinrichtung angeschlossen ist.

Es ist weiters möglich, daß in Strömungsrichtung des Abwassers nach der Desorptionseinrichtung, vorzugsweise nach dem Nachfilter, wenigstens ein Pufferbehälter zur Lagerung des gereinigten Abwassers vorgesehen ist.

In diesem Pufferbehälter kann das gereinigte Abwasser bis zu Wiederverwendung gelagert werden. In diesem Pufferbehälter können eventuell verbleibende Restverunreinigungen aufgefangen werden, die erst nach dem Abtrennen der organischen Substanzen eliminierbar sind.

Die Desorptionseinrichtung kann im oberen Bereich ihres Behälters wenigstens einen Anschluß für das Einbringen von Entschäumungsmittel aufweisen.

An die, insbesondere im oberen Teil des Desorptions-Behälters vorgesehene, Austrittsöffnung zum Abführen des Desorptionsmittels bzw. Strippgases aus der Desorptionseinrichtung kann eine Leitung angeschlossen sein, in der wenigstens ein Filter, beispielsweise ein Aktivkohlefilter, zum Reinigen des Desorptionsmittels vorgesehen ist.

Um eine optimale Stoffaustauschfläche und Durchmischung zu gewährleisten, ist es vorteilhaft, wenn die Dispergiereinrichtung zum Einbringen des Desorptionsmittels in das Abwasser aus Fritten bzw. Filterkerzen. Düsen, Injektoren od.dgl. besteht, wobei insbesondere Fritten bzw. Filterkerzen aus porösem Material, z.B. faserverstärktem, porösen Kunststoff, gesinterten Glasfasern od.dgl., mit einer Porengröße von 1 bis 5 mm$^{-3}$ vorgesehen sind.

Für einen optimalen Reinigungsvorgang ist es weiters zweckmäßig, wenn die Dispergiereinrichtung bzw. die Pumpe für das Desorptionsmittel mit einer Steuereinrichtung verbunden sind, welche den Durchsatz von Desorptionsmittel durch das Abwasser insbesondere in Abhängigkeit vom Füllstand im Behälter der Desorptionseinrichtung steuert, wobei gegebenenfalls das Eintragen von Desorptionsmittel in den Behälter schon während des Füllens des Behälters mit Abwasser beginnt.

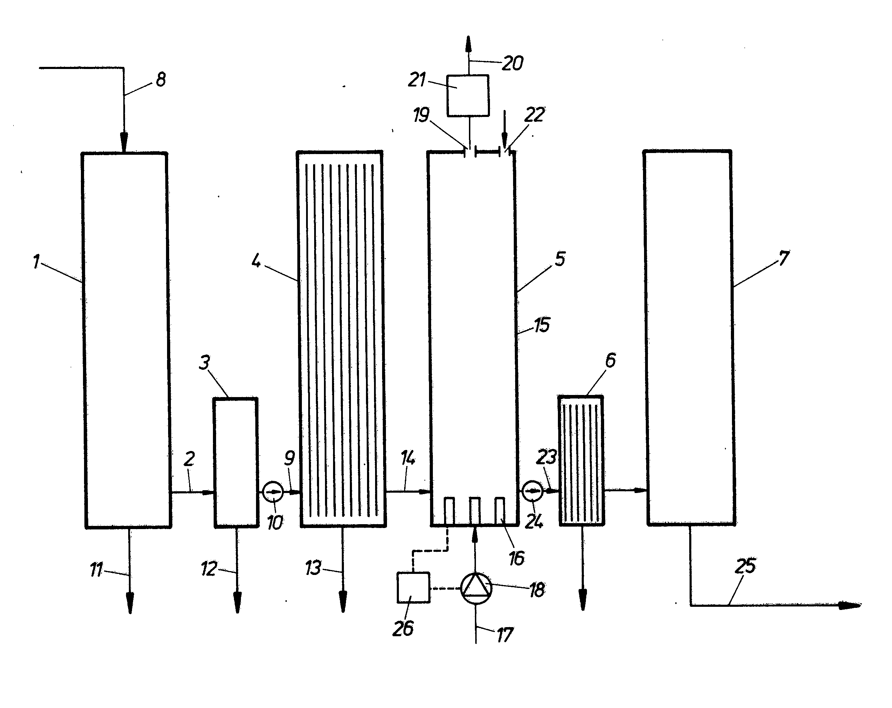

Die Erfindung wird nachstehend an Hand der Zeichnung, in der ein Ausführungsbeispiel der erfindungsgemäßen Vorrichtung zum Reinigen von Abwasser schematisch dargestellt ist, näher beschrieben.

Die dargestellte Vorrichtung umfaßt einen Absetzbehälter 1 für das verunreinigte Abwasser, an den mit einer Leitung 2 zwei Filtereinrichtungen 3,4 und eine Desorptionseinrichtung 5 angeschlossen sind, der ein Nachfilter 6 und ein Pufferbehälter 7 für das gereinigte Abwasser nachgeschaltet sind.

Das verunreinigte Abwasser wird mit einer Leitung 8 dem Absetzbehälter 1 zugeführt und gelangt über die Leitung 2 in die Filtereinrichtung 3, die als Grobfilter ausgebildet ist und einen Einsatz aus Mineralwolle, z.B. Glaswolle, aufweist. Über eine Leitung 9, in der eine Förderpumpe 10 für das Abwasser vorgesehen ist, wird das Abwasser in die zweite Filtereinrichtung 4 gefördert. Diese Filtereinrichtung 4 ist als Kammerfilterpresse mit feinen Filterplatten ausgebildet. In dieser Filtereinrichtung 4 werden vornehmlich die Farbstoffe abgetrennt. Die Partikelgröße des dispergierten Farbstoffes beträgt hiebei beispielsweise maximal etwa 1 µm.

Die groben Schmutzstoffe setzen sich jeweils am Boden des Absetzbehälters 1 und in den Filtereinrichtungen, 3,4 ab, und können durch Auslässe 11,12,13 im Boden dieser Einrichtungen bzw. durch Austausch der Filtereinsätze entfernt werden.

Die Filtereinrichtung 4 ist mit einer Leitung 14 für das Abwasser mit der Desorptionseinrichtung bzw. dem Stripper 5 verbunden. Die Desorptionseinrichtung 5 umfaßt einen im wesentlichen geschlossenen, zylindrischen Behälter 15, in dessen unterem Bereich eine Dispergiereinrichtung 16 für das Desorptionsmittel, in diesem Falle Druckluft, vorgesehen ist. An die Dispergiereinrichtung 16 ist eine Leitung 17 zum Zuführen der Druckluft angeschlossen, in der eine kontinuierlich oder diskontinuierlich arbeitende Förderpumpe bzw. ein Gebläse 18 vorgesehen ist. Im oberen Bereich des Behälters 15 ist eine Öffnung 19 zum Abführen der mit organischen Verunreinigungen beladenen Druckluft vorhanden, an die eine Abluftleitung 20 angeschlossen ist. In der Abluftleitung 20 ist ein Filter 21, beispielsweise ein Aktivkohle-Filter, zum Reinigen der Abluft vorgesehen. Im oberen Bereich des Behälters 15 ist weiters eine Öffnung 22 zum Einbringen von Entschäumungsmittel in den Behälter 15 vorgesehen.

Das gereinigte Abwasser verläßt durch eine Leitung 23 die Desorptionseinrichtung 5. In der Leitung 23 ist eine Förderpumpe 24 vorgesehen, die das gereinigte Abwasser durch das Nachfilter 6 in den Pufferbehälter 7 fördert. Aus dem Pufferbehälter 7 kann das gereinigte Abwasser mit einer Leitung 25 einer Wiederverwendung zugeführt bzw. in einen Kanal abgeleitet werden.

Zur Steuerung des Luftdurchsatzes ist eine Steuereinrichtung 26 vorhanden, die mit der Dispergiereinrichtung 16 bzw. der Förderpumpe bzw. dem Gebläse 18 für das Desorptionsmittel verbunden ist.

Das Wesen des erfindungsgemäßen Verfahrens, zu dessen Durchführung die beschriebene Vorrichtung vorgesehen ist, besteht im wesentlichen aus den Grundoperationen Filtration und Desorption bzw. Strippen. Die groben Schmutzstoffe werden sedimentiert oder vom Filter abgetrennt und die Farbstoffpartikel des Abwassers werden in der Feinfiltrationsstufe abgetrennt. Dabei wird das Abwasser in dem Absetzbehälter 1 so lange gelagert, bis ein Großteil der Schmutzstoffe am Boden abgesetzt wird. Die restlichen groben Verunreinigungen werden in dem Vorfilter 3 (der z.B. Glaswolle enthält) abgetrennt. Die notwendige Entfärbung erfolgt in der Kammerfilterpresse 4 mit sehr feinen Filterplatten. Die Partikelgröße des dispergierten Farbstoffes beträgt etwa 0,1 µm bis 1 µm.

Das so entfärbte Abwasser wird der Desorptionseinrichtung 5 zugeführt. Dieses zylindrische Gefäß wird am Boden mit Luft beaufschlagt, wobei über die Dispergiereinrichtung 16 (z.B. Fritten) entsprechende Blasengrößen erzeugt werden. Ein Abtrennen der umweltrelevanten organischen Komponenten ist durch dieses Luftstripen möglich. Das Abwasser, das von Farb- und Feststoffen gereinigt ist, wird hiebei derart mit Luft kontaktiert, daß die organischen Substanzen entsprechend dem Gleichgewicht aus dem Abwasser entfernt werden.

Beim Entfetten wurden dem Abwasser gegebenenfalls Tenside zugesetzt, die ein starkes Schäumen des Wassers in der Desorptionseinrichtung 5 hervorrufen. Durch Zusatz eines entsprechenden Entschäumungsmittels, das in so geringen Konzentrationen wirksam ist, daß es eine Wiederverwendung des Wassers nicht verhindert, kann die Schaumbildung praktisch vermieden werden.

Die mit den Schadstoffen beladene Abluft, die sogenannte Strippluft tritt am oberen Ende der Desorptionseinrichtung 5 durch die Austrittsöffnung 19 in die Leitung 20 aus und kann je nach Art und Konzentration der Inhaltsstoffe nachgereinigt oder direkt an die Umgebungsluft abgegeben werden.

Gegebenenfalls kann dem Puffertank 7, der das gereinigte Abwasser bis zur Wiederverwendung lagert, das Nachfilter 6 vorgeschaltet werden. In diesem können eventuell verbleibende Restverunreinigungen aufgefangen werden, die erst nach Abtrennen der organischen Substanzen eliminierbar sind.

Ein vollständig automatisierter Ablauf der einzelnen Schritte und eine anwenderfreundliche Betriebsweise werden durch eine einfache automatische Steuerung erreicht. Insbesondere kann in Abhängigkeit vom, insbesondere mittels Druckwächtern festgestellten, Zustand der Filter der Abwasserzufluß zu den Filtern, insbesondere durch Einregelung, vornehmlich durch Erhöhung, der Pumpleistung auf gleiche Durchflußmenge, sowie gegebenenfalls die Desorptionsmittelzugabe gesteuert werden.

Die Erfindung ist insbesondere anwendbar zum Reinigen von Abwasser, das Farbstoffe und bzw. oder organisches Lösungsmittel aus dem Reinigen von Siebdruckeinrichtungen usw. und gegebenenfalls andere Verunreinigungen daraus enthält.

Als Desorptionsmittel können anstelle von Luft z.B. auch inerte Gase, Stickstoff usw. verwendet werden, die gegebenenfalls nach der Reinigung wiederverwendet werden können.

Beispiel:

500 l unbehandeltes Roh-Abwasser aus einer Siebdruckerei wurden in der erfindungsgemäßen Vorrichtung in drei Chargen behandelt. In der Filtriereinrichtung werden hiebei die Farbstoffe ausgeschieden. Das filtrierte Abwasser wurde in der Desorptionseinrichtung mit 0,5 - 3,5 m³ Luft/h behandelt. Im gereinigten Abwasser konnten an abzutrennenden Verunreinigungen nur bis zu 1 - 2 ppm nachgewiesen werden.

Die gesamte Menge von 500 l Abwasser wurde 3 Wochen im Kreislauf der Siebdruckerei verwendet, d.h. das Abwasser wurde 15- bis 20-fach wiederverwendet.

Eine Beeinträchtigung konnte bei der Wiederverwendung nicht beobachtet werden.

**Patentansprüche**

1. Verfahren zum Reinigen von, insbesondere industriellem, Abwasser aus Druckerei- insbesondere Siebdruckbetrieben, das Farbstoffe, organisches Lösungsmittel und gegebenenfalls andere Verunreinigungen enthält, dadurch gekennzeichnet, daß das Abwasser, insbesondere nach einer Grobfiltrierung, filtriert, insbesondere feinfiltriert, wird, wobei die im Abwasser enthaltenen Farbstoffe abgeschieden werden, und daß danach das filtrierte Abwasser unter Verwendung von Luft als Desorptionsmittel desorbiert bzw. gestrippt wird, wodurch zumindest der überwiegende Teil der nach dem Filtrieren noch im Abwasser vorhandenen Verunreinigungen, vor allem Lösungsmittel, insbesondere das organische Lösungsmittel, sowie gegebenenfalls Tenside aus dem Abwasser entfernt wird.

2. Verfahren nach Anspruch 1, dadurch gekennzeichnet, daß zum Kontaktieren des Desorptionsmittels Luft mit dem filtrierten Abwasser dieses Desorptionsmittel in Blasenform, vorzugsweise im wesentlichen von unten nach oben, durch das filtrierte Abwasser hindurchgeführt wird, wobei die Blasengröße des Desorptionsmittels insbesondere 0,4 - 4 mm beträgt.

3. Verfahren nach Anspruch 1 oder 2, dadurch gekennzeichnet, daß das Desorptionsmittel Luft in Blasenform und unter Druck, zweckmäßig kontinuierlich gegebenenfalls aber auch diskontinuierlich, in das filtrierte Abwasser eingeführt wird, wobei vorzugsweise 5 - 25 l Luft pro Liter Abwasser verwendet wird.

4. Verfahren nach einem der Ansprüche 1 bis 3, dadurch gekennzeichnet, daß die Filtration des Abwassers vor der Desorption ein- oder mehrstufig ausgeführt wird.

5. Verfahren nach einem der Ansprüüche 1 bis 4, dadurch gekennzeichnet, daß das Abwasser nach der Desorption nach filtriert wird.

6. Verfahren nach einem der Ansprüche 1 bis 5, dadurch gekennzeichnet, daß bei der Desorption des filtrierten Abwassers ein Entschäumungsmittel zugegeben wird.

7. Verfahren nach einem der Ansprüche 1 bis 6, dadurch gekennzeichnet, daß das aus dem Abwasser austretende Desorptionsmittel bzw. die Strippluft, vorzugsweise mittels Aktivkohlefilter, gereinigt wird.

8. Verfahren nach einem der Ansprüche 1 bis 7, dadurch gekennzeichnet, daß in Abhängigkeit vom, insbesondere mittels Druckwächtern festgestellten, Zustand der Filter der Abwasserzufluß zu den Filtern, insbesondere durch Einregelung, vornehmlich durch Erhöhung, der Pumpleistung auf gleiche Durchflußmenge, sowie gegebenenfalls die Desorptionsmittelzugabe gesteuert wird.

9. Vorrichtung zur Durchführung des Verfahrens nach einem der Ansprüche 1 bis 8, dadurch gekennzeichnet, daß wenigstens eine Filtereinrichtung (3,4) für das Abwasser vorgesehen ist, die mittels einer Leitung (14) mit einer in Strömungsrichtung des Abwassers nachgeschalteten eine Luftzuführung aufweisenden Desorptionseinrichtung (5) verbunden ist.

10. Vorrichtung nach Anspruch 9, dadurch gekennzeichnet, daß die Desorptionseinrichtung (5) einen im wesentlichen geschlossenen Behälter (15) aufweist, in dessen unterem Bereich wenigstens eine Dispergiereinrichtung (16) zum Einbringen des Desorptionsmittels Luft in das Abwasser vorgesehen ist, und in dessen oberem Bereich wenigstens eine Austrittsöffnung (19) zum Abführen des beladenen Desorptionsmittels angeordnet ist.

11. Vorrichtung nach Anspruch 10, dadurch gekennzeichnet, daß die Dispergiereinrichtung (16) mit einer Leitung (17) verbunden ist, in der wenigstens ein Gebläse (18) zum Zuführen des Desorptionsmittels Luft angeordnet ist.

12. Vorrichtung nach einem der Ansprüche 9 bis 11, dadurch gekennzeichnet, daß vor der Filtereinrichtung (4) wenigstens eine Förderpumpe (10) zum Zuführen des Abwassers zu der Filtereinrichtung (4) bzw. zur Desorptionseinrichtung (5) angeordnet ist.

13. Vorrichtung nach einem der Ansprüche 9 bis 12, dadurch gekennzeichnet, daß bei zwei der Desorptionseinrichtung (5) vorgeschalteten Filtereinrichtungen (3,4) die in Strömungsrichtung des Abwassers zuerst angeordnete Filtereinrichtung (3) als Grobfilter, beispielsweise mit einem Filtereinsatz aus Mineralwolle, ausgebildet ist, und die in Strömungsrichtung des Abwassers danach angeordnete Filtereinrichtung (4) als Feinfilter, beispielsweise als Kammerfilterpresse mit feinporigen Filterplatten ausgebildet ist.

14. Vorrichtung nach einem der Ansprüche 9 bis 13, dadurch gekennzeichnet, daß in Strömungsrichtung des Abwassers nach der Desorptionseinrichtung (5) wenigstens ein Nachfilter (6) zum Abscheiden von Restverunreinigungen vorgesehen ist.

15. Vorrichtung nach einem der Ansprüche 9 bis 14, dadurch gekennzeichnet, daß in Strömungsrichtung des Abwassers nach der Desorptionseinrichtung (5), vorzugsweise nach dem Nachfilter (6), wenigstens ein Pufferbehälter (7) zur Lagerung des gereinigten Abwassers vorgesehen ist.

16. Vorrichtung nach einem der Ansprüche 9 bis 15, dadurch gekennzeichnet, daß die Desorptionseinrichtung (5) im oberen Bereich ihres Behälters (15) wenigstens einen Anschluß (22) für das Einbringen von Entschäumungsmittel aufweist.

17. Vorrichtung nach einem der Ansprüche 9 bis 16, dadurch gekennzeichnet, daß an die, insbesondere im oberen Teil des Desorptions-Behälters (15) vorgesehene, Austrittsöffnung (19) zum Abführen des Desorptionsmittels aus der Desorptionseinrichtung (5) wenigstens ein Filter (21), beispielsweise ein Aktivkohlefilter, zum Reinigen des Desorptionsmittels angeschlossen ist.

18. Vorrichtung nach einem der Ansprüche 9
bis 17, dadurch gekennzeichnet, daß die Dispergiereinrichtung (16) zum Einbringen des
Desorptionsmittels in das Abwasser aus Fritten
bzw. Filterkerzen, Düsen, Injektoren od.dgl.
besteht, wobei insbesondere Fritten bzw. Filterkerzen aus porösem Material, z.B. faserverstärktem, porösem Kunststoff, gesinterten
Glasfasern od.dgl., mit einer Porengröße von 1
bis 5 mm$^{-3}$ vorgesehen sind.

19. Vorrichtung nach einem der Ansprüche 9
bis 18, dadurch gekennzeichnet, daß die Dispergiereinrichtung (16) bzw. das Gebläse (18)
für das Desorptionsmittel Luft mit einer Steuereinrichtung (26) verbunden sind, welche den
Durchsatz von Desorptionsmittel durch das
Abwasser insbesondere in Abhängigkeit vom
Füllstand im Behälter (15) der Desorptionseinrichtung (5) steuert, wobei gegebenenfalls das
Eintragen von Desorptionsmittel in den Behälter (15) schon während des Füllens des
Behälter (15) mit Abwasser beginnt.

0250394